# EUROPEAN PATENT SPECIFICATION

(11) **EP 4 692 577 B1**
(45) Date of publication and mention of the grant of the patent: **22.07.2026**
(21) Application number: 24192918.1
(22) Date of filing: 05.08.2024
(51) Int. Cl.: F16C 25/06, F16C 35/063, F16C 35/067

(54) **TRANSMISSION FOR A VEHICLE, AND ASSOCIATED VEHICLE AND METHOD**
GETRIEBE FÜR EIN FAHRZEUG UND ZUGEHÖRIGES FAHRZEUG UND VERFAHREN
TRANSMISSION POUR UN VÉHICULE, VÉHICULE ET PROCÉDÉ ASSOCIÉS

(43) Date of publication of application: 11.02.2026
(73) Proprietor: VOLVO TRUCK CORPORATION, 405 08 Göteborg (SE)
(72) Inventor: Hedman, Anders, 442 67 MARSTRAND (SE); Norberg, Sven, 422 47 HISINGS BACKA (SE)
(74) Representative: Lavoix

(56) References cited:
- US-B2- 9 284 949
- US-B2- 9 915 288

## Description

### TECHNICAL FIELD

The disclosure relates generally to vehicle transmissions. In particular aspects, the disclosure relates to a transmission for a vehicle, and an associated vehicle and method. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In a transmission, used in vehicles, rotating shafts are generally supported by bearings, which are seated in a housing. The housing is non-rotating, in other words, is immobile, or fixed relative to the shaft. To ensure the proper function of the shafts and the bearings, for example to minimize vibrations while preventing deformation of the bearing, it is known to preload the bearing and/or to adjust an axial gap of the bearing, or of a system comprising the bearing. This can be done by applying a load on an outer ring of the bearing. While this operation is straightforward when the outer ring of the bearing is seated in the housing, it becomes difficult when the inner ring of the bearing is seated in the housing, since the housing prevents a user from accessing the bearing. US 9 915 288 B2 discloses a transmission comprising a tapered roller bearing having an inner ring seated on a shaft, an outer ring seated in a housing, and an arrangement for preloading the bearing.

There is therefore a need to adjust the axial gap and/or preload of a system comprising bearings, including bearings for which the inner ring is seated in a housing, in a simple and convenient manner.

### SUMMARY

An aim of the invention is to solve these problems and provide a transmission comprising a system including bearings, the axial gap and/or preload of which is easy and convenient to adjust.

According to a first aspect of the disclosure the invention relates to a transmission for a vehicle, the transmission comprising:
- a fixed housing, comprising a central part, extending along an axis, and a transversal wall, extending radially from the central part;
- a rotatable shaft, adjacent to the central part;
- at least one bearing, radially interposed between the shaft and the housing, and coaxial with the shaft, the bearing being a tapered roller bearing comprising:
   ∘ an inner ring, seated in the housing;
   ∘ an outer ring, seated in the shaft; and
   ∘ tapered rollers interposed between the inner and outer rings,
- wherein the inner ring is arranged adjacent to a first side of the transversal wall, the inner ring is axially movable with respect to the housing to adjust an axial gap and/or a preload in a system comprising the at least one bearing and the rotatable shaft; and
- an adjustment device to axially move the inner ring, the adjustment device being in axial contact with the inner ring through openings of the transversal wall, the adjustment device being threadedly mounted on the housing so as to be screwed on and/or unscrewed from the housing.

A technical benefit may include making the axial gap and/or preload of the system easier to adjust, by using the adjustment device. Another technical benefit may include that the value of the axial gap and/or of the preload can be chosen as desired by the user, by screwing or unscrewing the adjustment device accordingly. This allows adjusting the axial gap and/or preload in a quick and convenient manner, thus making the transmission compatible with large-scale production. Furthermore, the axial gap and/or preload can be readjusted over time if necessary, to take into account potential wear of the different pieces of equipment and provide optimal performance of the bearings at all times.

Optionally in some examples, including in at least one preferred example:
- the adjustment device comprises:
   ∘ a fixation element which is threadedly mounted on the housing coaxially with the shaft; and
   ∘ a spacer comprising a crown, and pins distributed on the crown;
- the pins extend from the crown, through the openings of the transverse wall and towards the inner ring along the axis; and
- the pins are in axial contact with the inner ring through the openings of the transverse wall.

A technical benefit may include using an already existing fixation element such as nuts, which reduces the complexity and the cost of the adjustment device.

Optionally in some examples, including in at least one preferred example, threads of the fixation element at least partially face the spacer, radially relative to the axis.

Optionally in some examples, including in at least one preferred example, the spacer comprises at least six, preferably eight pins distributed around the crown, preferably regularly. A technical benefit may include distributing a load applied to the inner ring by the adjustment device in a uniform manner, to ensure that the preload and/or the axial gap is substantially constant.

Optionally in some examples, including in at least one preferred example, the adjustment device further comprises a first shim axially interposed between the fixation element and the spacer. A technical benefit may include making the adjustment of the axial gap and/or preload easier.

Optionally in some examples, including in at least one preferred example, the fixation element further comprises:
- a cover, in contact with a second side of the transversal wall; and
- a plurality of screws, inserted in the cover and threadedly mounted on the housing, heads of the screws are in axial contact with the cover, and the first shim is axially interposed between the cover and the crown.

A technical benefit may include using standard screws to decrease the cost and complexity of the adjustment device, while still ensuring proper contact between the screws and the fixation element, via the cover.

Optionally in some examples, including in at least one preferred example, the adjustment device further comprises a second shim axially interposed between the housing and the fixation element. This allows making the adjustment of the axial gap and/or preload easier. It also improves the stability of the fixation element.

Optionally in some examples, including in at least one preferred example:
- the fixation element comprises a threaded screw and a washer;
- the washer is axially interposed between a head of the screw and the second shim; and
- the washer is in contact with the crown.

A technical benefit may include improving the axial compactness of the adjustment device, and decreasing costs of the adjustment device, as a washer, which is a standard part, is used.

Optionally in some examples, the adjustment device further comprises a third shim axially interposed between the housing and the spacer. A technical benefit may include making the adjustment of the axial gap and/or preload easier.

Optionally in some examples, including in at least one preferred example, the crown comprises a plurality of branches extending radially, each of the pins being located on a branch. A technical benefit may include improving the axial compactness of the adjustment device.

Optionally in some examples, including in at least one preferred example, the crown is formed integrally with the pins. A technical benefit may include improved robustness of the spacer.

Optionally in some examples, including in at least one preferred example, the pins are inserted in holes in the crown. A technical benefit may include simplifying the manufacturing of the spacer, in particular of the pins.

Optionally in some examples, including in at least one preferred example, the holes are through-holes, the pins are inserted in the through-holes and one end of the pins is in contact with the fixation element. A technical benefit may include simplifying the manufacturing of the spacer since high precision during manufacturing is required only on the pins so they can be in contact with the fixation element.

According to a second aspect of the disclosure, the invention further relates to a vehicle comprising a motor and a transmission, the transmission being mechanically connected to the motor, the motor being configured to drive the rotatable shaft in rotation around the axis.

The second aspect of the disclosure may seek to provide a vehicle in which the axial gap and/or preload of the system in the transmission is easier to adjust. Another technical benefit may include that the value of the axial gap and/or of the preload can be selected as desired by the user, by screwing or unscrewing the adjustment device accordingly. This allows adjusting the axial gap and/or preload in a quick and convenient manner, which is compatible with large-scale production. Furthermore, the axial gap/and or preload can be adjusted over time if necessary, to take into account potential wear of the different pieces of equipment.

According to a third aspect of the disclosure, the invention further relates to a method for adjusting an axial gap and/or a preload in a system including at least one bearing in a transmission, for a vehicle, the transmission comprising:
- a fixed housing, comprising a central part, extending along an axis, and a transversal wall, extending radially from the central part;
- a rotatable shaft, adjacent to the central part;
- the at least one bearing, radially interposed between the shaft and the housing, and coaxial with the shaft, the bearing being a tapered roller bearing comprising:
   ∘ an inner ring, seated in the housing;
   ∘ an outer ring, seated in the shaft; and
   ∘ tapered rollers interposed between the inner and outer rings,
   wherein the inner ring is arranged adjacent to a first side of the transversal wall, the inner ring is axially movable with respect to the housing to adjust an axial gap and/or a preload in a system comprising the at least one bearing and the rotatable shaft; and
- an adjustment device to axially move the inner ring, the adjustment device being in axial contact with the inner ring through openings of the transversal wall, the adjustment device being threadedly mounted on the housing so as to be screwed on and/or unscrewed from the housing,
the method comprising:
- mounting the adjustment device on the housing; and
- using the adjustment device to adjust the axial gap and/or the preload in the system.

The third aspect of the disclosure may seek to provide a method to easily and conveniently adjust the axial gap and/or preload of the system. A technical benefit may include that the value of the axial gap and/or of the preload can be selected as desired by the user, by screwing or unscrewing the adjustment device accordingly. This allows adjusting the axial gap and/or preload in a quick and convenient manner, which is compatible with large-scale production. Furthermore, the axial gap/and or preload can be adjusted over time if necessary, to take into account potential wear of the different pieces of equipment.

Optionally, in some examples, including in at least one preferred example, using the adjustment device to adjust the axial gap and/or the preload in the system comprises screwing and/or unscrewing the adjustment device to move the adjustment device axially and adjust the axial gap and/or the preload in the bearing. A technical benefit may include making the adjustment of the axial gap and/or preload modifiable in time,

Optionally, in some examples, including in at least one preferred example, using the adjustment device to adjust the axial gap and/or the preload in the system comprises using a shim, included in the adjustment device. A technical benefit may include making the adjustment of the axial gap and/or preload easier, by planning beforehand a desired thickness of the shim.

### BRIEF DESCRIPTION OF THE DRAWINGS

Examples are described in more detail below with reference to the appended drawings.
**FIG. 1** is a schematic of an exemplary vehicle and a detail showing a transmission of the truck according to a first embodiment of the invention.
**FIG. 2** shows a detail of the transmission of figure 1.
**FIG. 3** is a cut view along plane A-A of figure 2.
**FIG. 4** is a detail of a transmission according to a second embodiment of the invention.
**FIG. 5** shows a detail of a transmission according to a third embodiment of the invention.
**FIG. 6** shows a detail of a transmission according to a fourth embodiment of the invention.
**FIG. 7** shows a detail of a transmission according to a fifth embodiment of the invention.
**FIG. 8** shows a detail of a transmission according to a sixth embodiment of the invention.
**FIG. 9** is a section along plane B-B of figure 8.
**FIG. 10** is a diagram of a method according to the invention.

### DETAILED DESCRIPTION

The detailed description set forth below provides information and examples of the disclosed technology with sufficient detail to enable those skilled in the art to practice the disclosure.

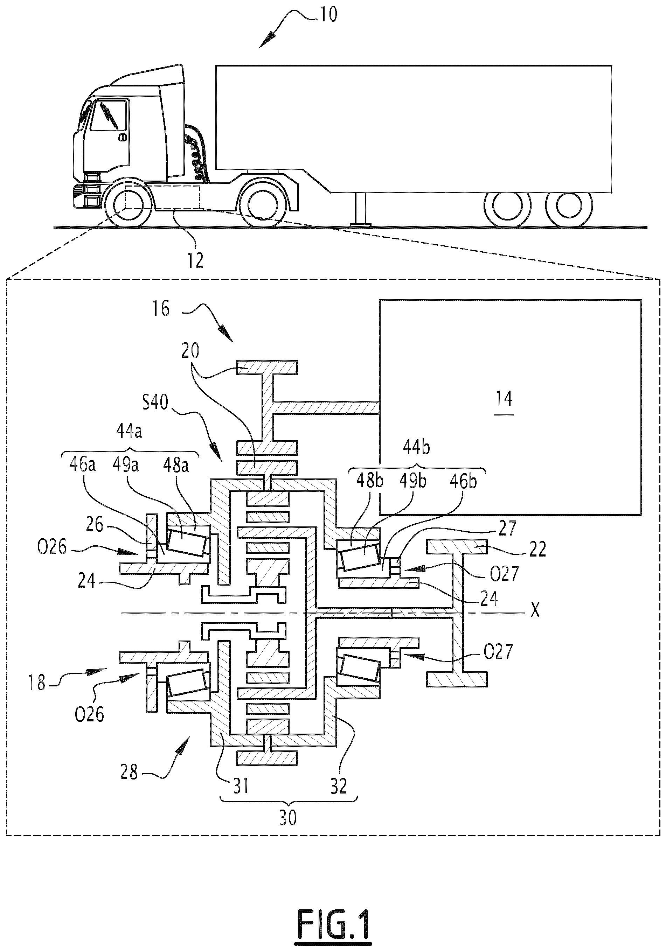

Figure 1 is a schematic of an exemplary vehicle 10. In the example of Figure 1, the vehicle 10 is a truck. In variant, the vehicle 10 is a bus or a construction vehicle.

The truck 10 comprises a driving system 12, which advantageously comprises an electric motor 14. The truck 10 is therefore an electric truck. In some examples that are not represented, the driving system 12 comprises a motor, which is an internal combustion engine, or a combination of an electric motor and an internal combustion engine.

In some examples, the driving system 12 is located on, or integrated to, a driven axle of the vehicle 10, thus being part of a so-called e-axle.

The driving system 12 further comprises a transmission 16, mechanically connected to the motor 14. The transmission 16 comprises a fixed housing 18 and advantageously, a primary reduction gearset 20 and a secondary reduction gearset, of which only one gearwheel 22 is represented.

The fixed housing 18 comprises a central part 24, which extends axially, and transversal walls 26 and 27, which extend radially from the central part 24. By axially, it is meant along an axis X and by radially, it is meant perpendicularly to the axis X. The central part 24 thus extends along the axis X, and the transversal walls 26 and 27 extend perpendicular to the axis X. The central part 24 is advantageously in the shape of an empty cylinder along the axis X. In some examples that are not represented, the central part comprises multiple elements secured to each other, for example via screws.

In the example of figure 1, the central part 24 and the transversal walls 26 and 27 are integral with each other. In variant, the central part 24 and the transversal walls 26 and 27 are distinct elements, which are secured to each other via screws, for example. The transversal walls 26 and 27 comprise openings, respectively O26 and O27, which extend along the axis X. The openings O26 are through-holes, which extend along the axis X from a first side 56 to a second side 57 of the transversal wall 26. Similarly, the openings O27 are through-holes, which extend along the axis X from a first side to a second side of the transversal wall 27.

In some examples, only one of the transverse walls 26 or 27 comprises openings. For example, only the transverse wall 26 comprises openings O26.

The primary reduction gearset 20 is mechanically connected to the electric motor 14 and configured to be driven in rotation around the axis X.

The transmission 16 further comprises a shiftable small reduction planetary gear train 28, also called planetary gear train. The planetary gear train 28 comprises a rotatable shaft 30, which is advantageously formed by two gearwheel carriers 31 and 32, which are advantageously secured to each other. The rotatable shaft 30 is adjacent to the central part 24. In particular, a portion of the rotatable shaft 30 faces the central part 24 along the axis X. The rotatable shaft 30 is configured to rotate around the axis X. Advantageously, the rotatable shaft 30 is coaxial with the central part 24.

The planetary gear train 28 is mechanically connected to the primary reduction gearset 20 and configured to be driven in rotation around the axis X. To support the planetary gear train 28, and in particular the shaft 30 while it is rotating, the planetary gear train 28 further comprises two bearings 44a and 44b.

In some examples, which are not represented, the planetary gear train 28 comprises one bearing, or more than two bearings.

The bearings 44a and 44b are radially interposed between the shaft 30 and the housing 18. The bearings 44a and 44b are coaxial with the shaft 30. The bearings 44a and 44b are tapered bearings and comprise an inner ring, respectively 46a, 46b, an outer ring, respectively 48a and 48b, and tapered rollers, respectively 49a and 49b.

The following description is done referencing only to the bearing 44a and to the transversal wall 26, but is also applicable for bearing 44b and transversal wall 27.

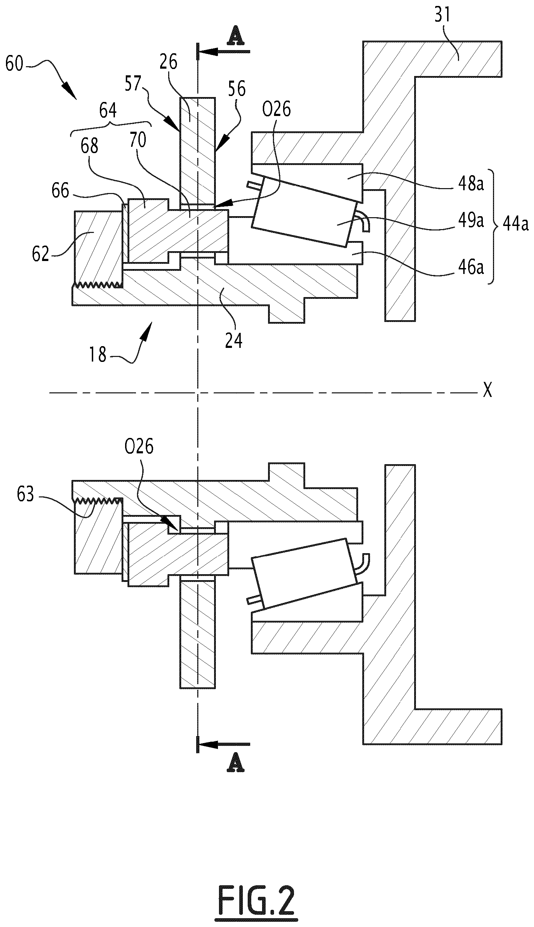

The inner ring 46a is seated in the housing 18, as represented in figures 1 and 2. The inner ring 46a is arranged adjacent to the first side 56 of the transversal wall 26. The inner ring 46a is axially movable with respect to the housing 18.

The outer ring 48a is seated in the shaft 30. In the example of figure 1, the outer ring 48a is seated in one of the gearwheel carriers 31. The outer ring 48a is secured to the shaft 30 and rotates axially with the shaft 30.

The tapered rollers 49a are interposed between the inner and outer rings 46a and 48a. In particular, the tapered rollers 49a are radially interposed between the inner and outer rings 46a and 48a, in a direction perpendicular to the axis X.

Thus, the bearing 44a supports the shaft 30 while allowing the shaft 30 to rotate around the axis X when driven by the electric motor 14. The same can be said for bearing 44b.

To optimize the performance of the bearing 44a and 44b, it is necessary to adjust the preload and/or an axial gap in a system S40 formed by the bearing 44a, the shaft 30 and the bearing 44b, by axially moving the inner ring 46a with respect to the housing 18. The preload is an axial force, which is applied to the bearing 44a, in this case, to the inner ring 46a. The axial gap is an axial offset value between the inner and outer rings 46a and 48a. In the case where there is no axial gap, a preload may be present in the system S40. In the case where there is no preload, an axial gap may be present in the system S40. In the remainder of the description, "preload" refers to the preload and/or the axial gap.

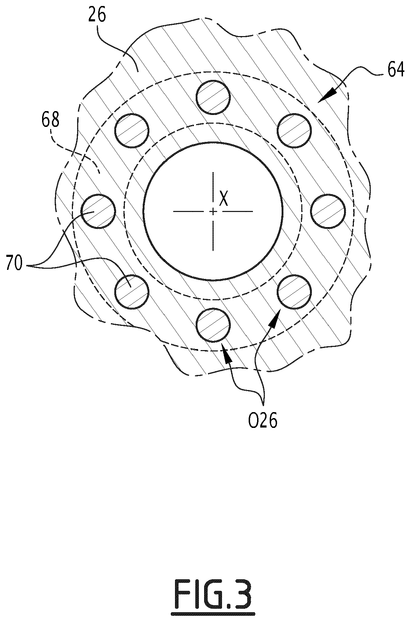

To adjust the preload in the bearing 44a, the transmission 16 further comprises an adjustment device 60, not represented in figure 1, and represented on figures 2 and 3. The adjustment device 60 advantageously comprises a fixation element 62, a spacer 64 and, in option, a shim 66, axially interposed between the fixation element 62 and the spacer 64.

The adjustment device 60 is threadedly mounted on the housing 18, so as to be screwed on and/or unscrewed from the housing 18. In other words, the adjustment device 60 is screw mounted, or more generally, threadedly mounted, on the housing 18. In the example of figure 2, the fixation element 62 is a nut, which is threadedly mounted, in other words screw mounted, on the central part 24 of the housing 18, advantageously on threads 63 of the central part 24. More generally, the fixation element 62 is coaxial with the axis X around which the shaft 30 rotates. In variant or in complement, the fixation element 62 is mounted coaxially with the shaft 30.

The spacer 64 comprises a crown 68 and several pins 70, distributed around the crown 68, as visible in figure 3. In the example the figures 1 to 3, the spacer 64 comprises eight pins 70 which are spaced around the crown 68. In some examples, the spacer 64 comprises more, or less than eight pins 70. For example, the spacer 64 comprises at least six pins 70. The pins are preferably spaced regularly along the crown 68.

In the example of figures 1 to 3, the crown 68 and the pins 70 are formed integrally with each other.

In a variant which is not represented, the crown 68 and the pins 70 are distinct elements, and the pins 70 are secured to the crown 68, for example by being inserted in blind holes in the crown 70.

The pins 70 extend axially through the openings O26 towards the inner ring 46a to be in axial contact with the inner ring 46a. The adjustment device 60 is therefore in axial contact with the inner ring 46a, through the openings O26.

The shim 66 is used for example to ensure the desired axial gap and/or axial preload.

A method to adjust the axial gap and/or the preload in the system S40 comprises a step 1000 of mounting the adjustment device 60 on the fixed housing 18. This is done for example by screwing the adjustment device 60 on the fixed housing, or more generally, by threadedly mounting the adjustment device 60 on the housing 18. In the example of figures 1 to 3, step 1000 is done by screwing the nut 62 towards an abutment of the central part 24.

Then the adjustment device 60 is used to adjust the axial gap and/or the preload in the system S40 during an adjustment step 1200.

In the example of figures 1 to 3, the shim 66 is used to adjust the desired axial gap and/or axial preload at step 1200. In particular, a thickness of the shim 66, measured along the axis X is chosen to achieve the proper axial gap and/or preload.

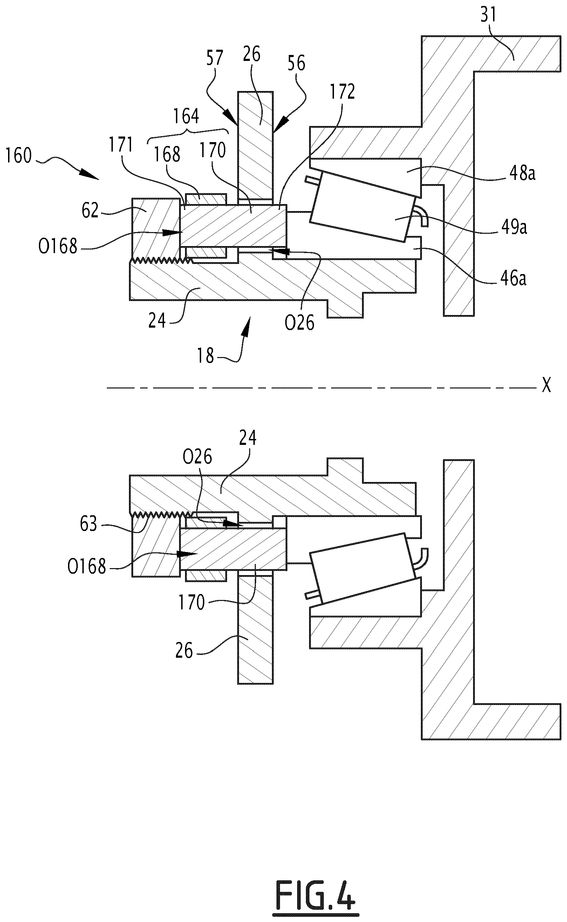

In figures 4 to 9, elements identical to the ones previously described are referenced with the same reference numbers and not described in detail.

Figure 4 shows an adjustment device 160, according to a second embodiment of the invention.

The adjustment device 160 comprises a fixation element 62 and a spacer 164 which replaces spacer 64. The spacer 164 comprises a crown 168 and pins 170. The pins 170 are inserted in through-holes O168 provided in the crown 168 so as to protrude on either side of the crown 168. The pins 170 also extend through the openings O26 of the transversal wall 26. Therefore, the fixation element 62 is in axial contact with one end 171 of the pins 170, and the inner ring 46a is in contact with the other end 172 of the pins 170.

In the example of figure 4, the adjustment step 1200 is done by screwing and/or unscrewing the adjustment device 160 in order to move it along the axial axis X, and therefore move axially the inner ring 46a to adjust the axial gap. A user may screw and/or unscrew the nut 62, thus axially move the spacer 64, which in turn exerts a load on the inner ring 46a, to adjust the preload, or moves the inner ring 46a, to adjust the axial gap.

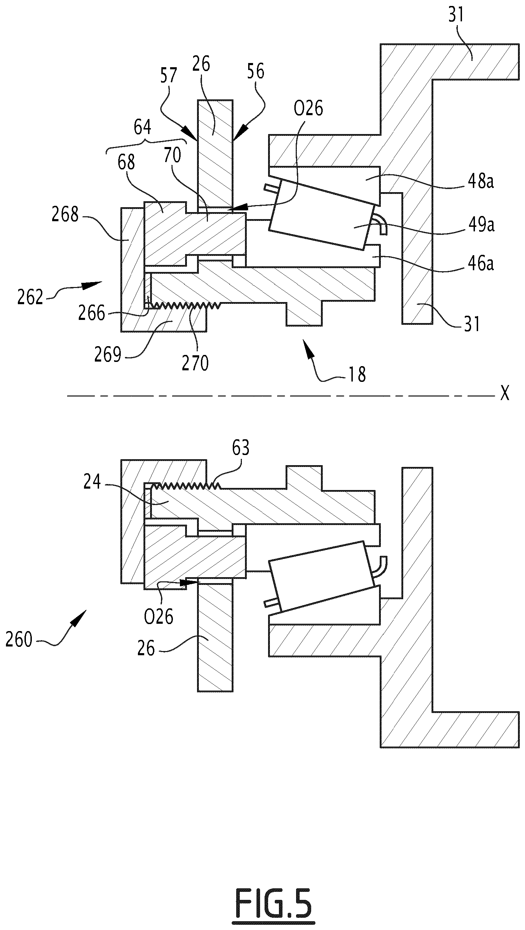

Figure 5 shows an adjustment device 260 according to a third embodiment of the invention. The adjustment device comprises a fixation element 262, a spacer 64 and a shim 266, axially interposed between the fixation element 262 and the housing 18. In particular, the shim 266 is axially interposed between the fixation element 262 and the central part 24.

The fixation element 262 is for example a screw, and comprises a head 268 which is in contact with the spacer 64, and a threaded shank 269, so the fixation element 262 can be threadedly mounted, in other words screw mounted, on the central part 24, by mutual engagement of the threads 63 on the central part, and the threads 270 on the threaded shank 269. In the example of figure 5, the fixation element 262 is a hollow screw, and both the head 268 and the shank 269 are hollow. When the fixation element 262 is screwed to the central part 24, the threads 270 advantageously face the spacer 64, radially relative to the axis X. In the example of figure 5, the threads 270 partially face the spacer 64, radially relative to the axis X. This advantageously increases the compactness of the transmission 16 along the axis X.

The fixation element 262 may be screwed to mount the adjustment device 260 on the housing 18. The shim 266 is used to adjust the desired axial gap and/or axial preload at step 1200, similarly to what was described for the adjustment device 60. In particular, a thickness of the shim 266, measured along the axis X, is chosen to achieve the desired axial gap and/or preload.

Advantageously, the shim 266 also maximizes the contact between the central part 24 and the fixation element 262, for example to improve the stability of the fixation element 262. It also allows larger tolerances of the housing 18, in particular the central part 24, along the axis X.

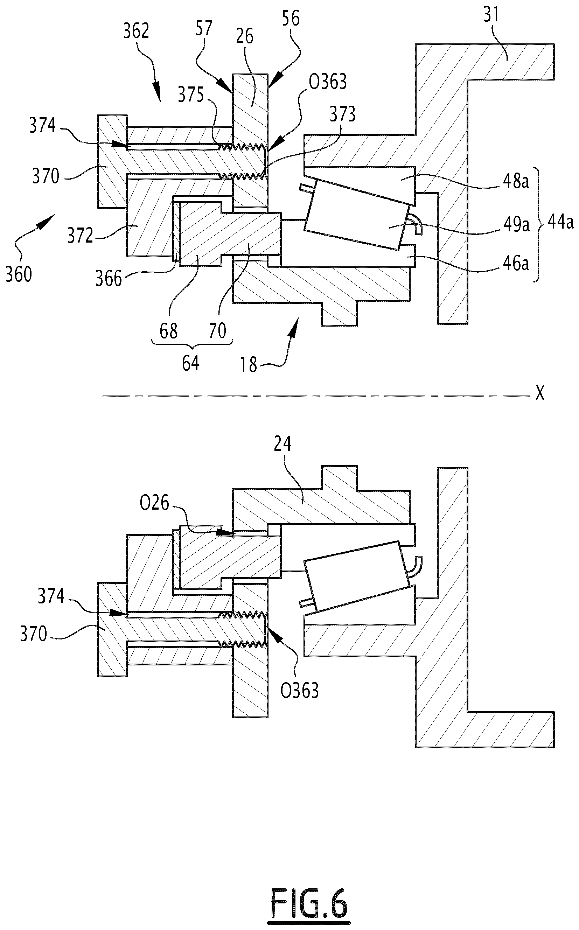

Figure 6 shows an adjustment device 360, according to a fourth embodiment of the invention.

The adjustment device 360 comprises a fixation device 362, a spacer 64 and a shim 366.

The fixation device 362 comprises a plurality of screws 370 and a cover 372.

The cover 372 comprises through-holes 374 extending axially. The cover 372 is in contact with the transversal wall 26, in particular with the second side 57 of the transversal wall 26. The cover 372 is also in contact with the shim 366, which is interposed axially between the spacer 64 and the cover 372.

The cover 372 is held in place via the screws 370 which are inserted in the through-holes 374 and threadedly mounted, in other words screw mounted, on the housing 24. In particular, the screws 370 are inserted into threaded holes O363 in the transversal wall 26, for mutual engagement of threads 373 in the threaded holes O363 and threads 375 of the screws 370.

Each threaded hole O363 is advantageously aligned with the through holes 374, to facilitate the attachment of the cover 372 by the screws 370. The head of each screw 370 is advantageously in axial contact with the cover 372.

When the screws 370 are inserted into the threaded holes O363, the threads 375 of the screw 370 face partially the spacer 64 radially relative to the axis X, to increase the compactness of the transmission 16 along the axis X.

The shim 366 is axially interposed between the crown 68 of the spacer 64 and the cover 372 so that the cover 372 and the spacer 64 are in indirect contact through the shim 366. In an example that is not represented, the adjustment device 360 does not comprise a shim 366 and the cover 372 is directly in axial contact with the spacer 64.

The screws 370 are screwed to mount the adjustment device 260 on the housing 18 at step 1000, by tightening the cover 372 against the transversal wall 26. The shim 366 is used to adjust the desired axial gap and/or axial preload at step 1200, similarly to what was described for the adjustment device 60.

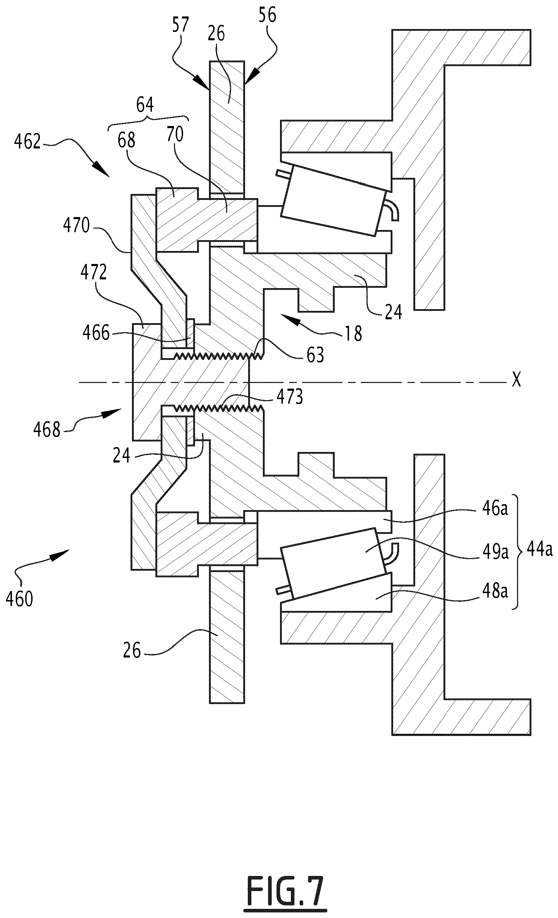

Figure 7 shows an adjustment device 460, according to a fifth embodiment of the invention.

The adjustment device 460 comprises a fixation element 462, a spacer 64, and a shim 466, axially interposed between the fixation element 462 and the housing 18. The fixation element 462 comprises a screw 468 and a washer 470, the screw 468 being inserted in the washer 470.

The head 472 of the screw 468 is in axial contact with the washer 470.

The screw 468 is threaded and threadedly mounted, in other words screw mounted, on the central part 24 of the housing 18, more precisely, by mutual engagement of the threads 63 on the central part 24, and threads 473 on the shank of the screw 468.

When the screw 468 is mounted on the central part 24, the threads of the screw 468 face partially the spacer 64 radially relative to the axis X, to increase the compactness of the transmission 16 along the axis X.

The washer 470 is axially interposed between the head 472 of the screw 468 the shim 466.

The washer 470 is also in contact with the spacer 64, for example in axial contact with the crown 68.

Thus, screwing and/or unscrewing the screw 468 moves the washer 470 along the axis X to mount the adjustment device 460 on the housing 18 at step 1000, and the shim 466 is used to adjust the preload in the system S40 at step 1200.

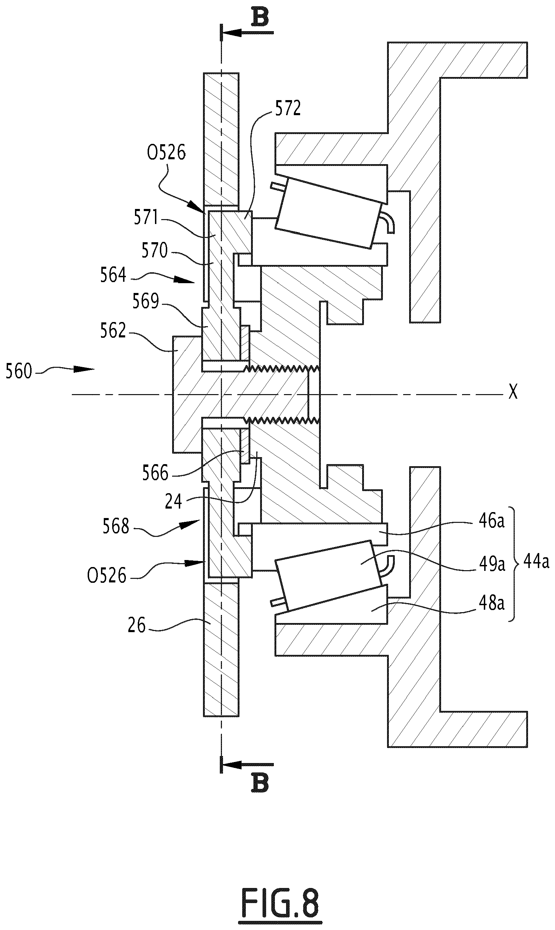

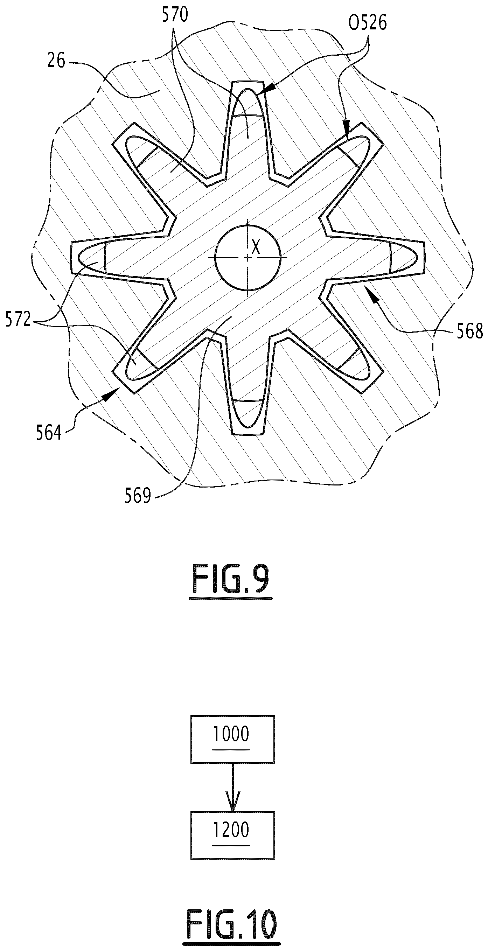

Figures 8 and 9 represent an adjustment device 560, according to a sixth embodiment of the invention.

The adjustment device 560 comprises a fixation element 562, a spacer 564 and a shim 566. The fixation element 562 is in the form of a screw, similar to screw 468.

The spacer 564 comprises a crown 568, which comprises a center 569 and plurality of branches 570 that extend radially from the center 569. As is visible in figure 9, the crown 568 comprises eight branches 570. The spacer 564 further comprises pins 572 which are each located on a branch 570. In the example of figures 8 and 9, each pin 572 is located at an end 571 of each branch 570, in particular the end of a branch 570 opposite to the end connected to the center 569. The pins 572 extend along the axis X. The pins 572 are formed integrally with the branches 570, but in variant they are secured to the branches 570, for example by being inserted in holes in the branches 570.

The shim 566 is axially interposed between the housing 18 and the spacer 564, more precisely between the center 569 and the central part 24.

The transversal wall 26 comprises openings O526, which replace the openings O26. The openings O526 are through-openings that have a shape complementary to the shape of the branches 570, so the branches 570 can fit in the openings O526. This improves the compactness of the transmission 16 along the axial axis X.

The pins 572 extend through the openings O526 to be in axial contact with the inner ring 46a. The fixation element 562 ensures that the adjustment device 560 is mounted on the housing 18 and that the spacer 564 and the shim 566 are clamped towards the central part 24. The shim 566 ensures that the fixation element 562 is in contact with the pins 572, to adjust the preload and/or the axial gap in the system S40.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A transmission (16) for a vehicle (10), the transmission (16) comprising:
- a fixed housing (18), comprising a central part (24), extending along an axis (X), and a transversal wall (26, 27), extending radially from the central part (24);
- a rotatable shaft (30), adjacent to the central part (24);
- at least one bearing (44a, 44b), radially interposed between the shaft (30) and the housing (18), and coaxial with the shaft (30), the bearing (44a, 44b) being a tapered roller bearing comprising:
∘ an inner ring (46a, 46b), seated in the housing (18);
∘ an outer ring (48a, 48b), seated in the shaft (30); and
∘ tapered rollers (49a, 49b) interposed between the inner and outer rings (46a, 46b, 48a, 48b),
wherein the inner ring (46a, 46b) is arranged adjacent to a first side (56) of the transversal wall (26), the inner ring (46a, 46b) is axially movable with respect to the housing (18) to adjust an axial gap and/or a preload in a system (S40) comprising the bearing (44a, 44b) and the rotatable shaft (30); and
- an adjustment device (60; 160; 260; 360; 460; 560) to axially move the inner ring (46a, 46b), the adjustment device (60; 160; 260; 360; 460; 560) being in axial contact with the inner ring (46a, 46b) through openings (O26, O27; O526) of the transversal wall (26, 27), the adjustment device (60; 160; 260; 360; 460; 560) being threadedly mounted on the housing (18) so as to be screwed on and/or unscrewed from the housing (18).

2. The transmission (16) of claim 1, wherein
- the adjustment device (60; 160; 260; 360; 460; 560) comprises:
∘ a fixation element (62; 262; 362; 462; 562) which is threadedly mounted on the housing (18) coaxially with the shaft (30); and
∘ a spacer (64; 164; 564) comprising a crown (68; 168; 568), and pins (70; 170; 572) distributed on the crown (68; 168; 568);
- the pins (70; 170; 572) extend from the crown (68; 168; 568), through the openings (O26; O526) of the transverse wall (26) and towards the inner ring (46a) along the axis (X); and
- the pins (70; 170; 572) are in axial contact with the inner ring (46a) through the openings (O26; O526) of the transverse wall (26).

3. The transmission (16), according to claim 2, wherein threads (270; 370; 473) of the fixation element (262; 362; 462) at least partially face the spacer (64), radially relative to the axis (X).

4. The transmission (16) of any of claims 2 to 3, wherein the spacer (64, 564) comprises at least six, preferably eight pins (70; 170; 572) regularly distributed around the crown (68; 168; 568), preferably regularly.

5. The transmission (16) of any of claims 2 to 4, wherein the adjustment device (60; 360) further comprises a first shim (66; 366) axially interposed between the fixation element (62; 362) and the spacer (64).

6. The transmission (16) according to claim 5, wherein the fixation element (360) further comprises:
- a cover (372), in contact with a second side (57) of the transversal wall (26); and
- a plurality of screws (370), inserted in the cover (372) and threadedly mounted on the housing (18), heads of the screws (370) are in axial contact with the cover (372), and the first shim (366) is axially interposed between the cover (372) and the crown (68).

7. The transmission (16) of any of claims 2 to 6, wherein the adjustment device (260; 460) further comprises a second shim (266; 466) axially interposed between the housing (18) and the fixation element (262; 462).

8. The transmission (16) of claim 7, wherein
- the fixation element (462) comprises a threaded screw (468) and a washer (470);
- the washer (470) is axially interposed between a head (472) of the screw (468) and the second shim (466); and
- the washer (470) is in contact with the crown (68).

9. The transmission (16) of any of claims 2 to 8, wherein the adjustment device (560) further comprises a third shim (566) axially interposed between the housing (18) and the spacer (564).

10. The transmission (16) according to any of claims 2 to 9, wherein the crown (68) comprises a plurality of branches (570) extending radially, each of the pins (572) being located on a branch (570).

11. The transmission (16) according to any of claims 2 to 10, wherein the crown (68; 568) is formed integrally with the pins (70; 572).

12. The transmission (16) according to any of claims 2 to 10, wherein the pins (170) are inserted in holes (O168) in the crown (168).

13. The transmission (16) according to claim 12, wherein the holes (O168) are through-holes, the pins (170) are inserted in the through-holes and one end (171) of the pins (170) is in contact with the fixation element (62).

14. Vehicle (10) comprising a motor (14) and a transmission (16) according to any of the claims 1 to 13, the transmission (16) being mechanically connected to the motor (14), the motor (14) being configured to drive the rotatable shaft (30) in rotation around the axis (X).

15. A method for adjusting an axial gap and/or a preload in a system (S40) including at least one bearing (44a, 44b) in a transmission (16), for a vehicle (10), the transmission (16) comprising:
- a fixed housing (18), comprising a central part (24), extending along an axis (X), and a transversal wall (26, 27), extending radially from the central part (24);
- a rotatable shaft (30), adjacent to the central part (24);
- the at least one bearing (44a, 44b), radially interposed between the shaft (30) and the housing (18), and coaxial with the shaft (30), the bearing (44a, 44b) being a tapered roller bearing comprising:
∘ an inner ring (46a, 46b), seated in the housing (18);
∘ an outer ring (48a, 48b), seated in the shaft (30); and
∘ tapered rollers (49a, 49b) interposed between the inner and outer rings (46a, 46b, 48a, 48b),
wherein the inner ring (46a, 46b) is arranged adjacent to a first side of the transversal wall (26), the inner ring (46a, 46b) is axially movable with respect to the housing (18) to adjust an axial gap and/or a preload in the system (S40) comprising the at least one bearing (44a, 44b) and the rotatable shaft (30); and
- an adjustment device (60; 160; 260; 360; 460; 560) to axially move the inner ring (46a, 46b), the adjustment device (60; 160; 260; 360; 460; 560) being in axial contact with the inner ring (46a, 46b) through openings (O26, O27; O526) of the transversal wall (26, 27), the adjustment device (60; 160; 260; 360; 460; 560) being threadedly mounted on the housing (18) so as to be screwed on and/or unscrewed from the housing (18),
the method comprising:
- mounting (1000) the adjustment device (60; 160; 260; 360; 460; 560) on the housing (18), and
- using (1200) the adjustment device (60; 160; 260; 360; 460; 560) to adjust the axial gap and/or the preload in the system (S40).

## Patentansprüche

1. Getriebe (16) für ein Fahrzeug (10), das Getriebe (16) umfassend:
- ein feststehendes Gehäuse (18), umfassend ein mittleres Teil (24), das sich entlang einer Achse (X) erstreckt, und eine Querwand (26, 27), die sich radial von dem mittleren Teil (24) erstreckt;
- eine drehbare Welle (30) angrenzend an das mittlere Teil (24);
- mindestens ein Lager (44a, 44b), das radial zwischen der Welle (30) und dem Gehäuse (18) eingefügt und koaxial zu der Welle (30) ist, wobei das Lager (44a, 44b) ein Kegelrollenlager ist, umfassend:
∘ einen Innenring (46a, 46b), der in dem Gehäuse (18) sitzt;
∘ einen Außenring (48a, 48b), der auf der Welle (30) sitzt; und
∘ Kegelrollen (49a, 49b), die zwischen dem Innenring und dem Außenring (46a, 46b, 48a, 48b) eingefügt sind,
wobei der Innenring (46a, 46b) angrenzend an eine erste Seite (56) der Querwand (26) angeordnet ist, der Innenring (46a, 46b) in Bezug auf das Gehäuse (18) axial bewegbar ist, um ein Axialspiel und/oder eine Vorspannung in einem System (S40) einzustellen, umfassend das Lager (44a, 44b) und die drehbare Welle (30); und
- eine Einstellvorrichtung (60; 160; 260; 360; 460; 560), um den Innenring (46a, 46b) axial zu bewegen, wobei die Einstellvorrichtung (60; 160; 260; 360; 460; 560) durch Öffnungen (O26, O27; O526) der Querwand (26, 27) mit dem Innenring (46a, 46b) in axialem Kontakt ist, wobei die Einstellvorrichtung (60; 160; 260; 360; 460; 560) mittels Gewinde an dem Gehäuse (18) montiert ist, um auf das Gehäuse (18) aufgeschraubt und/oder von dem Gehäuse (18) abgeschraubt zu werden.

2. Getriebe (16) nach Anspruch 1, wobei
- die Einstellvorrichtung (60; 160; 260; 360; 460; 560) Folgendes umfasst:
∘ ein Befestigungselement (62; 262; 362; 462; 562), das mittels Gewinde an dem Gehäuse (18) koaxial zu der Welle (30) montiert ist; und
∘ ein Abstandhalter (64; 164; 564), umfassend einen Kranz (68; 168; 568) und Stifte (70; 170; 572), die an dem Kranz (68; 168; 568) verteilt sind;
- sich die Stifte (70; 170; 572) von dem Kranz (68; 168; 568) durch die Öffnungen (O26; O526) der Querwand (26) und entlang der Achse (X) zu dem Innenring (46a) hin erstrecken; und
- die Stifte (70; 170; 572) durch die Öffnungen (O26; O526) der Querwand (26) mit dem Innenring (46a) in axialem Kontakt sind.

3. Getriebe (16) nach Anspruch 2, wobei Gewinde (270; 370; 473) des Befestigungselements (262; 362; 462) dem Abstandhalter (64) zumindest teilweise radial in Bezug auf die Achse (X) zugewandt sind.

4. Getriebe (16) nach einem der Ansprüche 2 bis 3, wobei der Abstandhalter (64, 564) mindestens sechs, vorzugsweise acht Stifte (70; 170; 572) umfasst, die regelmäßig um den Kranz (68; 168; 568), vorzugsweise gleichförmig, verteilt sind.

5. Getriebe (16) nach einem der Ansprüche 2 bis 4, wobei die Einstellvorrichtung (60; 360) ferner eine erste Ausgleichsscheibe (66; 366) umfasst, die axial zwischen dem Befestigungselement (62; 362) und dem Abstandhalter (64) eingefügt ist.

6. Getriebe (16) nach Anspruch 5, wobei das Befestigungselement (360) ferner Folgendes umfasst:
- eine Abdeckung (372), in Kontakt mit einer zweiten Seite (57) der Querwand (26); und
- eine Vielzahl von Schrauben (370), die in die Abdeckung (372) eingesetzt und mittels Gewinde an dem Gehäuse (18) montiert sind, wobei Köpfe der Schrauben (370) mit der Abdeckung (372) in axialem Kontakt sind, und die erste Ausgleichsscheibe (366) axial zwischen der Abdeckung (372) und dem Kranz (68) eingefügt ist.

7. Getriebe (16) nach einem der Ansprüche 2 bis 6, wobei die Einstellvorrichtung (260; 460) ferner eine zweite Ausgleichsscheibe (266; 466) umfasst, die axial zwischen dem Gehäuse (18) und dem Befestigungselement (262; 462) eingefügt ist.

8. Getriebe (16) nach Anspruch 7, wobei
- das Befestigungselement (462) eine Gewindeschraube (468) und eine Ausgleichsscheibe (470) umfasst;
- die Ausgleichsscheibe (470) axial zwischen einem Kopf (472) der Schraube (468) und der zweiten Ausgleichsscheibe (466) eingefügt ist; und
- die Ausgleichsscheibe (470) in Kontakt mit dem Kranz (68) ist.

9. Getriebe (16) nach einem der Ansprüche 2 bis 8, wobei die Einstellvorrichtung (560) ferner eine dritte Ausgleichsscheibe (566) umfasst, die axial zwischen dem Gehäuse (18) und dem Abstandhalter (564) eingefügt ist.

10. Getriebe (16) nach einem der Ansprüche 2 bis 9, wobei der Kranz (68) eine Vielzahl von Zweigen (570) umfasst, die sich radial erstrecken, wobei sich jeder der Stifte (572) an einem Zweig (570) befindet.

11. Getriebe (16) nach einem der Ansprüche 2 bis 10, wobei der Kranz (68; 568) einstückig mit den Stiften (70; 572) gebildet ist.

12. Getriebe (16) nach einem der Ansprüche 2 bis 10, wobei die Stifte (170) in Löcher (O168) in dem Kranz (168) eingesetzt sind.

13. Getriebe (16) nach Anspruch 12, wobei die Löcher (O168) Durchgangslöcher sind, die Stifte (170) in die Durchgangslöcher eingesetzt sind und ein Ende (171) der Stifte (170) mit dem Befestigungselement (62) in Kontakt ist.

14. Fahrzeug (10), umfassend einen Motor (14) und ein Getriebe (16) nach einem der Ansprüche 1 bis 13, wobei das Getriebe (16) mechanisch mit dem Motor (14) verbunden ist, wobei der Motor (14) konfiguriert ist, um die drehbare Welle (30) in Drehung um die Achse (X) zu versetzen.

15. Verfahren zum Einstellen eines Axialspiels und/oder einer Vorspannung in einem System (S40), das mindestens ein Lager (44a, 44b) in einem Getriebe (16) für ein Fahrzeug (10) beinhaltet, das Getriebe (16) umfassend:
- ein feststehendes Gehäuse (18), umfassend ein mittleres Teil (24), das sich entlang einer Achse (X) erstreckt, und eine Querwand (26, 27), die sich radial von dem mittleren Teil (24) erstreckt;
- eine drehbare Welle (30) angrenzend an das mittlere Teil (24);
- das mindestens eine Lager (44a, 44b) radial zwischen der Welle (30) und dem Gehäuse (18) eingefügt und koaxial zur Welle (30) ist, wobei das Lager (44a, 44b) ein Kegelrollenlager ist, umfassend:
∘ einen Innenring (46a, 46b), der in dem Gehäuse (18) sitzt;
∘ einen Außenring (48a, 48b), der auf der Welle (30) sitzt; und
∘ Kegelrollen (49a, 49b), die zwischen dem Innenring und dem Außenring (46a, 46b, 48a, 48b) eingefügt sind,
wobei der Innenring (46a, 46b) angrenzend an eine erste Seite der Querwand (26) angeordnet ist, der Innenring (46a, 46b) in Bezug auf das Gehäuse (18) axial bewegbar ist, um ein axiales Spiel und/oder eine Vorspannung in dem System (S40) einzustellen, umfassend das mindestens eine Lager (44a, 44b) und die drehbare Welle (30); und
- eine Einstellvorrichtung (60; 160; 260; 360; 460; 560), um den Innenring (46a, 46b) axial zu bewegen, wobei die Einstellvorrichtung (60; 160; 260; 360; 460; 560) durch Öffnungen (O26, O27; O526) der Querwand (26, 27) mit dem Innenring (46a, 46b) in axialem Kontakt ist, wobei die Einstellvorrichtung (60; 160; 260; 360; 460; 560) mittels Gewinde an dem Gehäuse (18) montiert ist, um auf das Gehäuse (18) aufgeschraubt und/oder von dem Gehäuse (18) abgeschraubt zu werden,
das Verfahren umfassend:
- Montieren (1000) der Einstellvorrichtung (60; 160; 260; 360; 460; 560) an dem Gehäuse (18), und
- Verwenden (1200) der Einstellvorrichtung (60; 160; 260; 360; 460; 560) zum Einstellen des axialen Spiels und/oder der Vorspannung in dem System (S40).

## Revendications

1. Transmission (16) pour un véhicule (10), la transmission (16) comprenant :
- un boîtier fixe (18), comprenant une partie centrale (24), s'étendant le long d'un axe (X), et une paroi transversale (26, 27), s'étendant radialement à partir de la partie centrale (24) ;
- un arbre rotatif (30), adjacent à la partie centrale (24) ;
- au moins un palier (44a, 44b), intercalé radialement entre l'arbre (30) et le boîtier (18), et coaxial à l'arbre (30), le palier (44a, 44b) étant un palier à rouleaux coniques comprenant :
∘ une bague interne (46a, 46b), installée dans le boîtier (18) ;
∘ une bague externe (48a, 48b), installée dans l'arbre (30) ; et
∘ des rouleaux coniques (49a, 49b) intercalés entre les bagues interne et externe (46a, 46b, 48a, 48b),
dans lequel la bague interne (46a, 46b) est agencée de manière adjacente à un premier côté (56) de la paroi transversale (26), la bague interne (46a, 46b) étant axialement mobile par rapport au boîtier (18) pour régler un espace axial et/ou une précharge dans un système (S40) comprenant le palier (44a, 44b) et l'arbre rotatif (30) ; et
- un dispositif de réglage (60 ; 160 ; 260 ; 360 ; 460 ; 560) pour déplacer axialement la bague interne (46a, 46b), le dispositif de réglage (60 ; 160 ; 260 ; 360 ; 460 ; 560) étant en contact axial avec la bague interne (46a, 46b) à travers des ouvertures (O26, O27 ; O526) de la paroi transversale (26, 27), le dispositif de réglage (60 ; 160 ; 260 ; 360 ; 460 ; 560) étant monté par filetage sur le boîtier (18) de manière à être vissé et/ou dévissé du boîtier (18).

2. Transmission (16) selon la revendication 1, dans laquelle
- le dispositif de réglage (60 ; 160 ; 260 ; 360 ; 460 ; 560) comprend :
∘ un élément de fixation (62 ; 262 ; 362 ; 462 ; 562) qui est monté par filetage sur le boîtier (18) de manière coaxiale à l'arbre (30) ; et
∘ une entretoise (64 ; 164 ; 564) comprenant une couronne (68 ; 168 ; 568), et des broches (70 ; 170 ; 572) réparties sur la couronne (68 ; 168 ; 568) ;
- les broches (70 ; 170 ; 572) s'étendent à partir de la couronne (68 ; 168 ; 568), à travers les ouvertures (O26 ; O526) de la paroi transversale (26) et vers la bague interne (46a) le long de l'axe (X) ; et
- les broches (70 ; 170 ; 572) sont en contact axial avec la bague interne (46a) par le biais des ouvertures (O26 ; O526) de la paroi transversale (26).

3. Transmission (16) selon la revendication 2, dans laquelle les filetages (270 ; 370 ; 473) de l'élément de fixation (262 ; 362 ; 462) font au moins partiellement face à l'entretoise (64), radialement par rapport à l'axe (X).

4. Transmission (16) selon l'une quelconque des revendications 2 à 3, dans laquelle l'entretoise (64, 564) comprend au moins six, de préférence huit broches (70 ; 170 ; 572) régulièrement réparties autour de la couronne (68 ; 168 ; 568), de préférence régulièrement.

5. Transmission (16) selon l'une quelconque des revendications 2 à 4, dans laquelle le dispositif de réglage (60 ; 360) comprend en outre une première cale (66 ; 366) intercalée axialement entre l'élément de fixation (62 ; 362) et l'entretoise (64).

6. Transmission (16) selon la revendication 5, dans laquelle l'élément de fixation (360) comprend en outre :
- un couvercle (372), en contact avec un deuxième côté (57) de la paroi transversale (26) ; et
- une pluralité de vis (370), insérées dans le couvercle (372) et montées par filetage sur le boîtier (18), les têtes des vis (370) sont en contact axial avec le couvercle (372), et la première cale (366) est axialement intercalée entre le couvercle (372) et la couronne (68).

7. Transmission (16) selon l'une quelconque des revendications 2 à 6, dans laquelle le dispositif de réglage (260 ; 460) comprend en outre une deuxième cale (266 ; 466) axialement intercalée entre le boîtier (18) et l'élément de fixation (262 ; 462).

8. Transmission (16) selon la revendication 7, dans laquelle :
- l'élément de fixation (462) comprend une vis filetée (468) et une rondelle (470) ;
- la rondelle (470) est axialement intercalée entre une tête (472) de la vis (468) et la deuxième cale (466) ; et
- la rondelle (470) est en contact avec la couronne (68).

9. Transmission (16) selon l'une quelconque des revendications 2 à 8, dans laquelle le dispositif de réglage (560) comprend en outre une troisième cale (566) axialement intercalée entre le boîtier (18) et l'entretoise (564).

10. Transmission (16) selon l'une quelconque des revendications 2 à 9, dans laquelle la couronne (68) comprend une pluralité de branches (570) s'étendant radialement, chacune des broches (572) étant située sur une branche (570).

11. Transmission (16) selon l'une quelconque des revendications 2 à 10, dans laquelle la couronne (68 ; 568) est formée d'un seul tenant avec les broches (70 ; 572).

12. Transmission (16) selon l'une quelconque des revendications 2 à 10, dans laquelle les broches (170) sont insérées dans des trous (O168) dans la couronne (168).

13. Transmission (16) selon la revendication 12, dans laquelle les trous (O168) sont des trous débouchants, les broches (170) sont insérées dans les trous débouchants et une extrémité (171) des broches (170) est en contact avec l'élément de fixation (62).

14. Véhicule (10) comprenant un moteur (14) et une transmission (16) selon l'une quelconque des revendications 1 à 13, la transmission (16) étant connectée mécaniquement au moteur (14), le moteur (14) étant configuré pour entraîner l'arbre rotatif (30) en rotation autour de l'axe (X).

15. Procédé pour régler un espace axial et/ou d'une précharge dans un système (S40) comprenant au moins un palier (44a, 44b) dans une transmission (16), pour un véhicule (10), la transmission (16) comprenant :
- un boîtier fixe (18), comprenant une partie centrale (24), s'étendant le long d'un axe (X), et une paroi transversale (26, 27), s'étendant radialement à partir de la partie centrale (24) ;
- un arbre rotatif (30) adjacent à la partie centrale (24) ;
- l'au moins un palier (44a, 44b), intercalé radialement entre l'arbre (30) et le boîtier (18), et coaxial à l'arbre (30), le palier (44a, 44b) étant un palier à rouleaux coniques comprenant :
∘ une bague interne (46a, 46b), installée dans le boîtier (18) ;
∘ une bague externe (48a, 48b), installée dans l'arbre (30) ; et
∘ des rouleaux coniques (49a, 49b) intercalés entre les bagues interne et externe (46a, 46b, 48a, 48b),
dans lequel la bague interne (46a, 46b) est agencée de manière adjacente à un premier côté de la paroi transversale (26), la bague interne (46a, 46b) est axialement mobile par rapport au boîtier (18) pour régler un espace axial et/ou une précharge dans le système (S40) comprenant l'au moins un palier (44a, 44b) et l'arbre rotatif (30) ; et
- un dispositif de réglage (60 ; 160 ; 260 ; 360 ; 460 ; 560) pour déplacer axialement la bague interne (46a, 46b), le dispositif de réglage (60 ; 160 ; 260 ; 360 ; 460 ; 560) étant en contact axial avec la bague interne (46a, 46b) par le biais des ouvertures (O26, O27 ; O526) de la paroi transversale (26, 27), le dispositif de réglage (60 ; 160 ; 260 ; 360 ; 460 ; 560) étant monté par filetage sur le boîtier (18) de manière à être vissé et/ou dévissé du boîtier (18),
le procédé comprenant les faits de :
- monter (1000) le dispositif de réglage (60 ; 160 ; 260 ; 360 ; 460 ; 560) sur le boîtier (18), et
- utiliser (1200) le dispositif de réglage (60 ; 160 ; 260 ; 360 ; 460 ; 560) pour régler l'espace axial et/ou la précharge dans le système (S40).
